# EUROPEAN PATENT SPECIFICATION

(11) **EP 2 141 701 B1**
(45) Date of publication and mention of the grant of the patent: **09.03.2011**
(21) Application number: 08011588.4
(22) Date of filing: 26.06.2008
(51) Int. Cl.: G11B 7/09

(54) **Optical pickup device with two actuators**
Optische Lesekopfvorrichtung mit zwei Stellantrieben
Dispositif de capture optique avec deux actionneurs

(43) Date of publication of application: 06.01.2010
(73) Proprietor: Harman Becker Automotive Systems GmbH, 76307 Karlsbad (DE)
(72) Inventor: Suzuki, Tsuneo, 78087 Mönchweiler (DE); Dupper, Rolf, 78050 VS-Villingen (DE); Vizer, Cliff, 78056 V-Schwenningen (DE)
(74) Representative: Grünecker, Kinkeldey, Stockmair & Schwanhäusser Anwaltssozietät

(56) References cited:
- EP-A- 0 415 782
- EP-A- 0 470 807
- EP-A- 1 253 587
- EP-A- 1 548 720
- US-A- 6 097 690

## Description

The present invention relates to an optical pickup device with two lenses for scanning/recording of data in an optical storage medium.

### BACKGROUND OF THE INVENTION

Optical data storage systems became popular with the introduction of the Compact Disc (CD) and later the Digital Versatile Disc (DVD). Their applications include, but are not limited to, computer devices, mass storage database systems, audio and video equipment for home entertainment systems, as well as mobile applications, such as vehicle information and entertainment systems. Recently, broadband applications and the development of high definition television requiring even higher storage capacity has given rise to a new standard called Blu-ray Disc (BD), operating with a blue-violet laser with a shorter wavelength (405 nm) than the red laser used in CD (780 nm) and DVD (650 nm). Another alternative standard working with the blue-violet laser and developed recently is the HD-DVD (High Density DVD). Optical media can have data stored in concentric or spiral tracks (CD, DVD, BD, HD-DVD). More specifically, the data is stored as a series of tiny indentations called "pits". The areas between pits are called "land". Different optical properties of media pits and lands result in a difference in intensity of the light reflected. The different optical properties may, for example, be caused by changes in height between pits and land (CD) or by different crystallization properties of a medium in pits and land (CD-RW). By measuring the intensity change with a photodiode, the data can be read from the disc.

Devices for the scanning and/or recording of optical storage media typically comprise an optical head, also called a "pickup", to access locations, of the recording medium. Such a pickup is mounted on the movable part of the disc reading/recording unit in order to be arranged near to the storage medium and including a light emitting device such as a laser diode. For accessing the information tracks, the medium and the pickup are moved relative to each other. A light beam generated by the laser diode is then focused onto a desired spot on the medium. For scanning the medium, a reflected beam coming from the desired spot is received at a photo detector and typically converted into electrical signals for further processing.

When reading/recording the media, position errors may occur with respect to different directions. Track direction corresponds to the direction perpendicular on the tangent to the information track on the desired spot. This error may occur , for instance, due to irregularities of the eccentricity of the information track center. The deviations of the surface, which are normal with respect to the rotation axis (tilt direction), cause the distance between the medium and the pickup to vary, which can also result in a loss of focus. Focus direction is the direction perpendicular to the layer of the medium containing the information track. Both focus and tilt errors may by caused, for instance, by deviations media surface from a perfectly flat shape.

In order to correct the above mentioned position errors, i.e. to maintain the track and to focus on the desired spot, the pickup device typically includes an adjustable portion known as an actuator. An actuator comprises a lens holder which carries a lens and is capable of being adjusted quickly to compensate the position errors. The adjustment of the actuator's position is typically performed by means of electrically driving the coils that then interact with magnets. For instance, with a plurality of coils fixed on the lens holder, the position can be adjusted by supplying electric currents of various values to the various coils, which then adjust the actuator in the desired direction. In this manner, the positioning in tilt, the focus and the track direction can be performed and consequently, the desired spot of a given track can be focused with respect to the light source and the detector.

Compensating media irregularities by an actuator which adjusts the lens to the desired position has to be performed rapidly because of the high data reading (and/or recording) rates. The speed of the actuator adjustment has to reflect the velocity of the disc rotation, which is basically limited by hardware and can range to several thousands rotations per minute.

The speed of the actuator movement is influenced by the inertia given by the mass of the actuator. Higher speed can be achieved by applying higher driving currents. However, higher electromagnetic forces also require bigger coils and magnets, and this again increases the mass of the actuator. Moreover, the increased mass of an actuator results in its higher sensitivity to the mechanical shocks and vibrations.

In order to achieve success with products implementing new standards it is important to remain backward compatible, i.e. to be able to also maintain support for the present standards. For instance, it is desirable that one single disc drive (reading and/or writing unit) for Blu-ray discs is capable of reading and/or writing the DVD/CD media as well.

Since different standards use light sources with different wavelengths to read and/or write on the media, the corresponding reading/writing devices need different optical equipment, e.g. objective lenses. Only one of the lenses is used at a time. Thus, a state-of-the-art pickup device supporting more than one light source wavelength comprises an actuator carrying different lenses. Consequently, such actuator becomes larger and more susceptible to mechanical shocks and vibrations. The latter is particularly critical in automotive multimedia applications, where robustness against mechanical shocks and vibrations is absolutely necessary.

US-A-6 097 690 discloses an optical pickup for reading an writing plural kinds of discs. The pickup comprises two bi-axial actuators carrying the lenses and moveable independently of each other in the focus and track direction. The actuators are disposed preferably inclined to each other by a predetermined angle. Each actuator is placed within a separate pedestal which is fixedly connected to a common frame. The yokes and the connecting plate serve for magnetic backflow of each actuator separately.

EP-A-1 253 587 discloses an optical disc apparatus comprising two focusing actuators, each carrying an objective lens for reading optical discs having different substrate.

EP-A-0 415 782 discloses an optical disc apparatus with two optical heads for erasing and for writing, respectively in a single rotation of an optical disc. The optical apparatus comprises two optical heads, each having a lens actuator for independent movement control in focus and track direction.

EP-A-0 470 807 discloses an optical disc apparatus capable of recording and reproducing optical discs having different recording densities. Such an optical disc apparatus comprises two optical heads, each optical head carrying an objective lens, the optical heads being moveable independently.

### SUMMARY OF THE INVENTION

The present invention aims to overcome the above problems and to provide a pickup device for scanning an optical recording media, with improved robustness against mechanical shocks and vibrations.

This is achieved by the features as set forth in the independent claims.

Preferred embodiments are the subject matter of dependent claims.

It is the particular approach of the present invention to provide a single pickup device comprising two actuators. Each of the actuators carries a lens and is adjustable independently of the other actuator. This allows a reduction in the mass of the actuator and enables a speeding up of its adjustability. Furthermore, an actuator with reduced mass is also more robust against mechanical disturbances such as shocks and/or vibrations, for example.

According to a first aspect of the present invention, a pickup device for scanning an optical medium is provided. The optical pickup device comprises a first movable actuator including a first lens and a second movable actuator including a second lens. Both actuators are adjustable at least in the lens focus direction, the second actuator being adjustable independently of the first actuator adjustment.

The pickup device further comprises a common frame within which the first actuator and the second actuator are located. The size and shape of the frame limits the space where the first and the second actuator may move. Apart from the mechanical supporting function, the frame is preferably made of metal and serves for the magnetic backflow. The frame is preferably made of steel, but any other magnetic conductive material can also be used.

In particular, the frame further includes a front part facing the first actuator, a rear part facing the second actuator, a middle part, and a bottom part. The middle part serves for separating the space within which the first actuator is located from the space where the second actuator is located. The bottom part of the frame consists of two bars, each of them covering a side of the bottom of the first actuator and the second actuator. The bottom parts of the actuators covered by the frame are preferably those where the coils are mounted. This construction is advantageous with respect to the conducting of the magnetic flow. Moreover, it provides a body for the mounting of permanent magnets and a separation of space where the first actuator is movable from the space where the second actuator is movable.

Preferably, an actuator of the optical pickup device comprises at least one focus coil with the coil axis being parallel to the lens focus direction. This focus coil enables adjustment of the actuator in the direction of the lens focus direction. Such adjustment is necessary to compensate for any irregularities in the optical medium.

The actuator of the optical pickup device in accordance with the present invention further comprises at least one track coil with coil axis being perpendicular to the lens focus direction. The track coil enables the adjustment of the actuator in the tracking direction, the tracking direction being the direction within the medium layer and perpendicular to the track tangent in the desired spot.

In a preferred configuration, an actuator of the optical pickup device comprises a lens holder for carrying a lens. On the lens holder four focus coils are also mounted for moving the actuator in the lens focus direction. The focus coils have their axes parallel to the lens focus direction. Moreover, the lens holder carries four track coils for moving the actuator in the track direction. The track coils have their axes perpendicular to the lens focus direction. A configuration with four coils placed symmetrically on the lens holder is mechanically well-balanced and allows a reliable adjustment of the actuator in a wide space of tracking, focusing, and tilting directions. Thus, preferably two of the focus coils are mounted on one side of the lens holder and the other two focus coils are mounted on the opposite side of the lens holder.

However, a very simple pickup device in accordance with the present invention may also be constructed so that an actuator comprises only one single coil for focusing. The one focus coil can, for example, have its axis collocated with the optical axis of the lens, thus being positioned around the lens. Other numbers and configurations of actuator coils are also possible.

The track coils are preferably located adjacent on a side of the focus coils. Then, the track coils have an axis which is not only perpendicular to the lens focus direction but also parallel to the tracking direction, i.e. perpendicular on the tangent to the track. Such a configuration allows a reduction of actuator size and provides both the track and the focus coil with the possibility of interacting with a magnet.

Preferably, at least one permanent magnet interacting with at least one of the actuator coils is mounted on the fixed part of the pick up device. In order to move the actuator with respect to the fixed portion of the pickup device, a magnetic interaction is necessary. Thus, configurations are also possible, where the magnets on the fixed portion of the pickup device are electrically driven coils. On the other hand, permanent magnets can be mounted on the actuator to interact with the coils on the fixed portion of the pickup device.

In a preferred configuration of the present invention, plurality of permanent magnets is mounted on the fixed portion of the pickup device, each permanent magnet interacts with a track coil, the axis of said track coil being perpendicular on the magnet. Preferably, each permanent magnet interacts with a focus coil, the axis of said focus coil being parallel to the magnet.

The permanent magnets are mounted on the frame, two of them on its rear part, facing the second actuator, and two of them on the front part of the frame, facing the first actuator. Further, four magnets are mounted on the middle part, two of them facing the first actuator, and the other two of them facing the second actuator. The bottom part of the frame including two bars for magnetic backflow covers at least partially the bottom side of the coils.

Preferably, the optical device further comprises a first set of suspension wires connected to the first actuator; and a second set of suspension wires connected to the second actuator, wherein the first set of suspension wires and the second set of suspension wires lead to the same side of the pickup device. Especially, the first set of suspension wires leads along beside the outer side of the second set of suspension wires to one side of the pickup device.

Alternatively, the first set of suspension wires connected to the first actuator; and a second set of suspension wires connected to the second actuator leads to the opposite sides of the pickup device.

The suspension wires serve for mechanical support of an actuator and may also serve for electrical driving of the focus coils and track coils. However, the present invention is also applicable if the actuator is connected to the pickup device in a way that is different than via the suspension wires. For instance, an axis may be provided fixed on a pickup device so that an actuator can be adjusted by a rotational movement and by shifting along such an axis. Nevertheless, the suspension wires have the advantage of cost-efficient manufacturing and high speed accessing of the media by the actuator in comparison with other ways of connecting.

In accordance with the present invention, the first lens is adapted to focus light of a first wavelength range; and the second lens is adapted to focus light of a second wavelength range. For instance, the first lens are adapted to focus a red laser with wavelength of 650 nm and/or 780 nm and the second lens are adapted to focus a blue-violet laser with wavelength of 405 nm.

This can be especially used to scan optical media according to a plurality of standards, wherein the first actuator is adapted to scan optical media according to a first standard; and the second actuator is adapted to scan optical media according to a second standard. In particular, the first standard of optical media is the Blu-ray disc. However, any combination of standards such as for example, CD, DVD, BD, HD-DVD, is possible. One of the lenses can also be adapted to focus media of two different standards for instance, CD and DVD, whereas the other lens is adapted to scan for instance, BD or HD-DVD.

According to another aspect of the present invention, a playback device for reading an optical medium is provided. The playback device comprises an optical pickup device in accordance with the present invention and a control unit for individually controlling each of the two actuators. The control unit controls the position of the movable part in the focus direction. Additionally, the control unit may control the position of the movable part in the tracking direction. In order to carry out the present invention, one common control unit controlling independently either the first or the second actuator may be provided. Alternatively, two control units may be provided, the first control unit controlling the movements of the first actuator in the desired directions (focus, track), and the second control unit controlling the movement of the second actuator.

The above explanation and other objectives and features of the present invention will become more apparent from the following description and preferred embodiments given in conjunction with the accompanying drawings, in which:
- Fig. 1: is a schematic drawing illustrating a conventional double-lens actuator;
- Fig. 2: is a drawing illustrating a double lens optical pickup in accordance with an embodiment of the present invention;
- Fig. 3a: is a drawing illustrating the bottom side of the double lens optical pickup from Fig. 2;
- Fig. 3b: is a drawing showing the bottom side of the double lens optical pickup from Fig. 2 without a frame;
- Fig. 4: is a drawing illustrating a double lens optical pickup in accordance with another embodiment of the present invention;
- Fig. 5a: is a drawing illustrating the bottom side of the double lens optical pickup from Fig. 4; and
- Fig. 5b: is a drawing showing the bottom side of the double lens optical pickup from Fig. 4 without a frame.

### DETAILED DESCRIPTION

The present invention is based on the fact that objects with lower mass can move faster, change their direction and speed, and that they are thus also more robust against mechanical shocks and vibrations.

An optical reading/writing device typically comprises a movable arm for physically positioning a pickup device relative to the media in order to access different tracks. An optical pickup device houses a laser (or a plurality of lasers), optical elements, and associated electronic circuitry. As a laser source, a laser diode is used. After moving the pickup device to the desired track, the adjustment of the lens onto the desired spot is performed by a magnetically controlled actuator.

A pickup-device actuator is required to move fast in order to adjust the lens in accordance with the high rotational speed of the media which is necessary for a fast accessing of the data. Here, the mass of the actuator is a limiting factor. This becomes even more important in mobile applications such as, for example, automotive applications, where the optical reading/recording device is subject to accelerations, shocks, and vibrations. Thus, special care must be taken in the design of optical reading/recording devices in order to make them capable of the required functionality and, at the same time, to ensure their robustness against possible mechanical disturbances. It is desirable that the same reading/writing device is capable of reading data according to different standards such as CD, DVD or BD. In order to facilitate this, a pickup device typically contains two or more lenses. An appropriate lens is chosen to read the data in accordance with the determined format of the medium.

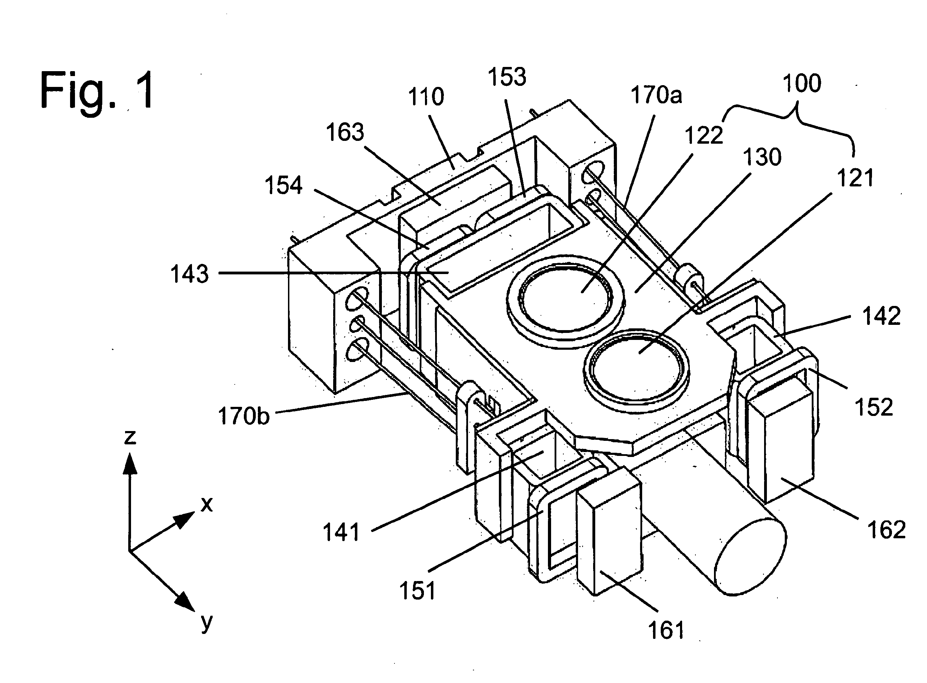

A state-of-the-art actuator 100 is illustrated in Figure 1, capable of reading different standards, and comprising two lenses. The two lenses 121 and 122 are carried by a lens holder 130, on which also front focus coils 141 and 142 and a rear focus coil 143 are fixed, as well as front track coils 151, 152 and rear track coils 153, 154. Here, the two lenses 121 and 122 are objective lenses serving for reading/writing using a red laser (for instance for DVD) or a blue laser (for instance for BD). The focus coils allow adjusting of the actuator 100 in the focus direction z, whereas the track coils serve to position the actuator 100 in the track direction x. The focus direction corresponds to the direction which is vertical with respect to the layer of the medium and perpendicular to the desired track. The track direction is the direction of a tangent to the track. The actuator 100 is connected to the pickup device via suspension wires 170a and 170b on the right and the left (side), respectively. The suspension wires 170a, 170b lead through a wire holder 110 and may also be used to electrically connect the actuator 100 to a driving source, i.e., to drive the focus coils 141-143 and the track coils 151-154.

The adjustment of the actuator 100 position is achieved by selectively driving various coils. The magnetic field generated in this manner then interacts with the field of permanent side magnets 161, 162 on the front of the actuator 100 and with the main magnet 163 on the rear side of the actuator 100. The permanent magnets 161, 162, 153 are mounted, for instance, on a supporting member of the pickup device. Magnetic interaction between the coils 141-143, 151-154 and the magnets 161-163 results in a movement of the actuator 100 in the gap between the magnets 161, 162 posed on the front side and the magnet 163 posed on the rear side. Hereby, the suspension wires also serve to balance mechanically the lens holder 130 carrying the lenses 121 and 122. The movement of the actuator 100 allows adjusting of the lens holder 130 in focus and track direction so as to compensate possible irregularities of the scanned medium.

A pickup device with a double-lens actuator 100 according to Figure 1 may be sufficient in usual applications where the reader/writer is basically static. As only one lens is active at a given time, mounting two lenses 121, 122 on a single actuator 100 is a suitable and cost efficient solution. Even if only one appropriate lens is used, both lenses have to be moved by the actuator 100. The actuator 100 has a higher mass since it carries two lenses, and thus the driving of such an actuator 100 has to be stronger, which, on the other hand, requires larger electronic elements such as coils and this increases the mass of the actuator to an even greater extent, it limits the maximum speed of its adjustment, and makes it more susceptible to mechanical disturbances.

Especially in automotive applications, such a solution limits the access speed of the pickup device. Even for usual applications, a further increasing of the data access speed is of interest.

Therefore, the present invention provides a pickup device robust against the mechanical disturbances and capable of a fast access to the media.

This is achieved by a pickup device comprising two actuators 101 and 102, each of which carries a lens. These actuators are movable independently of each other. Thus, to adjust a lens for instance in the focus direction z, only the coils of one actuator have to be driven. The actuator can be made smaller since it only carries one lens, the driving can be lower, and the size of the electronic elements can be reduced. Consequently, such an actuator can be adjusted faster and is also more robust with respect to mechanical shocks or vibrations.

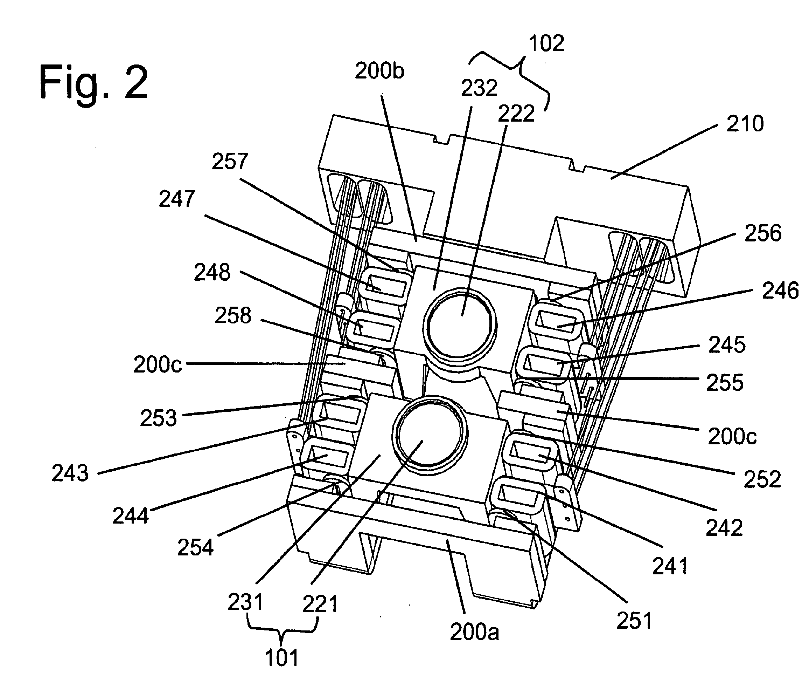

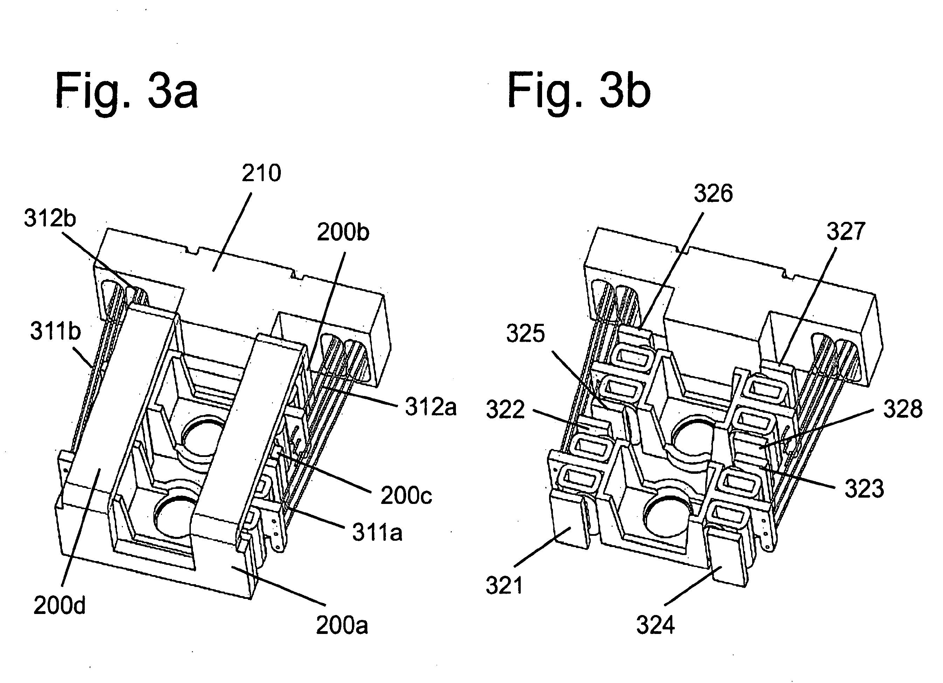

Figures 2, 3a and 3b illustrate a first embodiment of a pickup device in accordance with the present invention, comprising two actuators 101, 102. Figure 2 shows a top view of the pickup device, whereas Figure 3a and Figure 3b illustrate a bottom view of the same pickup device. Here, Figure 3b shows the bottom side of the pickup device without a frame member 200 in order to better visualize the components of the first actuator 101 and the second actuator 102.

The first (front) actuator 101 comprises a lens holder 231 carrying a first lens 221. The lens 221 can be mounted on the top of the lens holder 231. Alternatively, it can be a part of the lens holder 231, made of the same material.

The lens holder 231 is movably held by a set of suspension wires 311 a on its left side and by a set of suspension wires 311 b on its right side. The suspension wires are typically parallel and oriented in the direction y perpendicular to both focus and tracking direction. The two sets of suspension wires 311 a, 311 b are fixed to the lens holder preferably at the centre, so as to provide a mechanical equilibrium and to prevent any undesired tilting of the actuator due to its own weight. Preferably, the suspension wires are also used for driving the electronic elements on the actuator, thus providing an electrically conductive connection between the actuator and the pickup device. In the example of Figures 2, 3a, and 3b, the two sets of suspension wires 311 a, 311 b are fixed within the stubs at the left and right side of the lens holder 231, respectively. The stubs may be a part of the lens holder 231, made of the same material, or, alternatively, they may be mounted thereon.

Other ways of fixing the wires may also be applied, such as, for instance, a lens holder with stubs posed and adhered on the wires from the upper side. An actuator can even be connected to the pickup device in a manner different from the suspension wires. For instance, an axis connected to the fixed portion of the pickup device can be provided, the actuator being movable by means of rotation around the axis or by shifting along the axis. Any other movable connection between the actuator and the fixed portion of the pickup device can also be applied. However, the pickup devices with a wire held actuator can generally be produced more cost-efficiently and allow shorter access times.

The first actuator 101 further comprises electronic elements such as coils. After being electrically driven, a coil fixed on the actuator 101 interacts with a magnet placed on a fixed portion of the pickup device. This magnet can be a permanent magnet or again an electrically driven coil. The electromagnetic interaction between the magnet and the coil results in movement of the actuator 101 relative to the fixed portion of the pickup device.

In Figure 2, the first actuator 101 comprises four focus coils 241, 242, 243, 244 and four track coils 251, 252, 253, 254. The focus coils 241-244 serve for adjusting the actuator 101 in the focus direction z orthogonal to the medium layer containing tracks. The track coils 251-254 (partially visible) serve for adjusting the actuator 101 in the tracking direction x. The tracking direction and the focus direction together span a space of adjustments, in which the focussing, tracking and tilting take place.

Nevertheless, the present invention may be carried out by various different configurations of number and placement of coils. Here, the focus coils as well as the track coils may be identical or may differ by their size and/or shape and/or their electrical properties. The choice of the particular configuration depends on the desired parameters of the pickup device and on the employed manufacturing process.

A simple actuator could include just a single coil for adjustment in the focus direction only. Such a coil could, for instance, be mounted so that its axis is collocated with the lens axis. This results in a mechanically well-balanced configuration.

Another number of focus coils may be deployed. There may be two focus coils located, for instance, on the sides of the lens holder 231. There may also be three focus coils arranged, for instance, as in Figure 1 or differently.

The track coils may also be mounted on the actuator in order to enable its adjusting in the track direction x. Again, various configurations and combinations of different numbers and placements of track and focus coils may be employed.

According to the example in Figure 2, the four focus coils 241, 242, 243, 244 and four track coils 251, 252, 253, 254 of the first actuator 101 interact with the four magnets 321, 322, 323, 324 located on the fixed portion of the pickup device, as can be seen in Figure 3b. Here, the magnets 321-324 are permanent magnets. However, electrically driven coils may equally be used. Similarly, the coils located on the actuator 101 may be replaced by permanent magnets and the adjustment of the actuator may then be controlled by selectively driving the coils posed on the fixed portion of the pickup device.

The second (rear) actuator 102 comprises a lens holder 232 by which a second lens 222 is carried. The construction of this second actuator 102 may be the same as or different to the construction of the first actuator 101 as described above. The four focus coils 245, 246, 247, 248 enable adjusting of the second actuator 102 in the focus direction z, the four track coils 255, 256, 257, 258 enable adjusting of the second actuator 102 in the tracking direction x.

The second actuator 102 is also connected to the pickup device via two sets of suspension wires 312a and 312b on the left and right side, respectively. In the first example illustrated in Figures 2, 3a, and 3b, the set of suspension wires 312a connected to the left side of the second actuator 102 runs parallel along the inner side of the set of suspension wires 311a connected to left side of the first actuator 101. Similarly, the set of suspension wires 312b connected to the right side of the second actuator 102 runs parallel along the inner side of the set of suspension wires 311 b connected to the right side of the first actuator 101.

As can be seen in Figure 2, the permanent magnets 321-324 are mounted on a frame 200. The frame 200 includes a front part 200a, a rear part 200b, side parts 200c and a bottom part 200d. The bottom part 200d of the frame is shown in detail in Figure 3a.

The front part 200a of the frame 200 faces the front side of the first actuator 101. In accordance with a particular embodiment of the present invention, two permanent magnets 324 and 321 are mounted on the left side and on the right side of the front frame part 200a, respectively. These magnets 321, 324 face the track coils 251 and 254 mounted on the lens holder 231 and interact with them. Moreover, magnets 321, 324 interact with the focus coils 241 and 244, respectively. The placement of a track coil on the side of a focus coils facing the magnet allows for a compact design, which reduces the size of the actuator.

The rear part 200b of the frame 200 faces the rear side of the second actuator 102. Two permanent magnets 327 and 326 are mounted on the left side and on the right side of the rear part 200b of the frame, respectively. Again, these magnets face and interact with the track coils 257, 256 mounted on the lens holder 232 of the second actuator 102. Furthermore, the magnets 257, 256 interact with the focus coils 246 and 247.

The middle part 200c of the frame 200 serves for separating the space within which the first actuator 101 is located from the space where the second actuator 102 is located. Preferably, permanent magnets 323 and 322 are placed on the left side and on the right side of the middle part 200c of the frame 200, respectively. The magnets 322 and 323 face the rear part of the first actuator 101. More precisely, they face and interact with the track coils 252 and 253. The magnets 322 and 323 also interact with the focus coils 242 and 243, respectively. The positions of the permanent magnets 321, 322, 323, and 324 define the gap within which the first actuator 101 is movable. Similarly, permanent magnets 328 and 325 are mounted on the left side and on the right side of the middle part 200c of the frame 200. The magnets 328, 325 face the opposite side to the magnets 323 and 322; they face the front side of the second actuator 102. In particular, the magnets 325, 328 face and interact with the track coils 255 and 258. Moreover, the magnets 325, 328 interact with the focus coils 245 and 248, respectively. The gap within which the second actuator 102 can be moved is thus defined by the positions of the magnets 325, 326, 327, and 328.

The bottom part 200d of the frame 200 consists of two bars, each of them covering a side of bottom of the first actuator 101 and the second actuator 102. Preferably, the frame 200 is made of metal and, in addition to its mechanical supporting function, it also serves as a body for the magnetic backflow. The frame can, for example, be made of steel, but any other magnetically conductive material is also applicable. In particular, the two bars of the bottom part 200d of the frame 200 cover the coils mounted on the first actuator 101 and on the second actuator 102 at least partially. In the example of Figure 3a, the left bar of the frame 200d covers the focus coils 243, 244, 247, 248 and the track coils 253, 254, 257, 258. Similarly, the right bar of the frame 200d covers the focus coils 241, 242, 245, 246 and the track coils 251,252,255,256.

The first lens holder 231 and the second lens holder 232 in this example are cut out on their bottom side, which also reduces the weight of the actuator. The first actuator 101 and the second actuator 102 are placed symmetrically with respect to the middle part 200c of the frame 200. Hereby, each lens holder has a rectangular shape. The lens can be posed in the centre of the lens holder or, as shown in Figure 2, it can be posed eccentrically, nearer to the side facing the middle part 200c of the frame 200. Such a design allows the two lenses to move nearer to each other despite the middle part 200c of the frame 200 and the permanent magnets being attached thereon. Moreover, the side of the lens holder can be curved following the form of the lens. In this manner, again the size and mass of the actuator may be reduced.

According to one embodiment of the present invention, the four sets of suspension wires 311 a, 311 b, 312a, 312b lead from the first actuator 101 and the second actuator 102 to the same side of the pickup device through the wire holder 210 connected to a fixed portion of the pickup device. Here, the first set of suspension wires 311 a connected to the first actuator 101 on the left side runs along and beside the outer side of the second set of suspension wires 312a connected to the second actuator 102. Similarly, the first set of suspension wires 311 b connected to the first actuator 101 on the right side runs along and beside the outer side of the second set of suspension wires 312b connected to the second actuator 102.

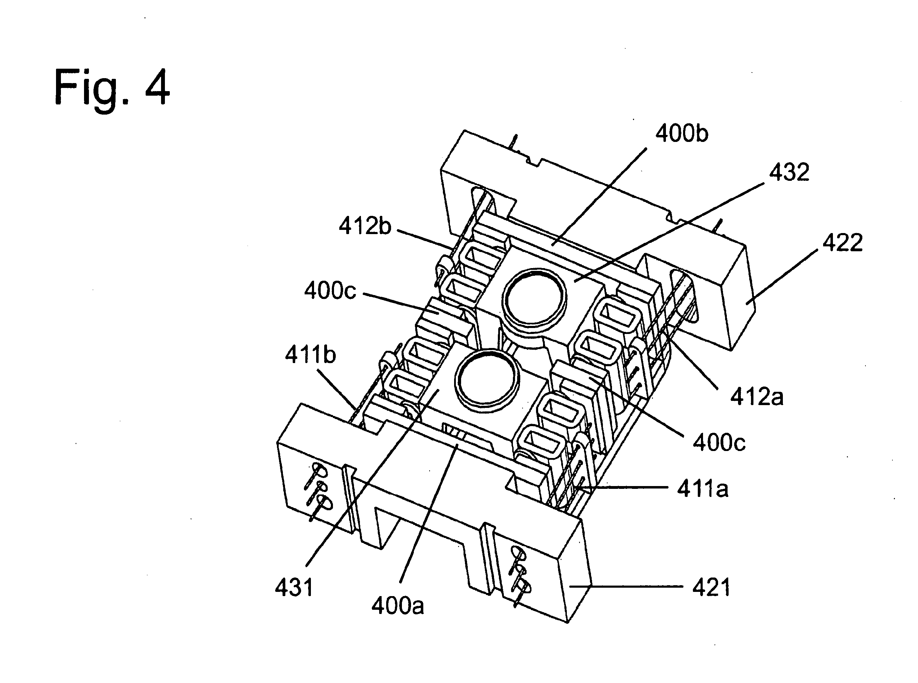

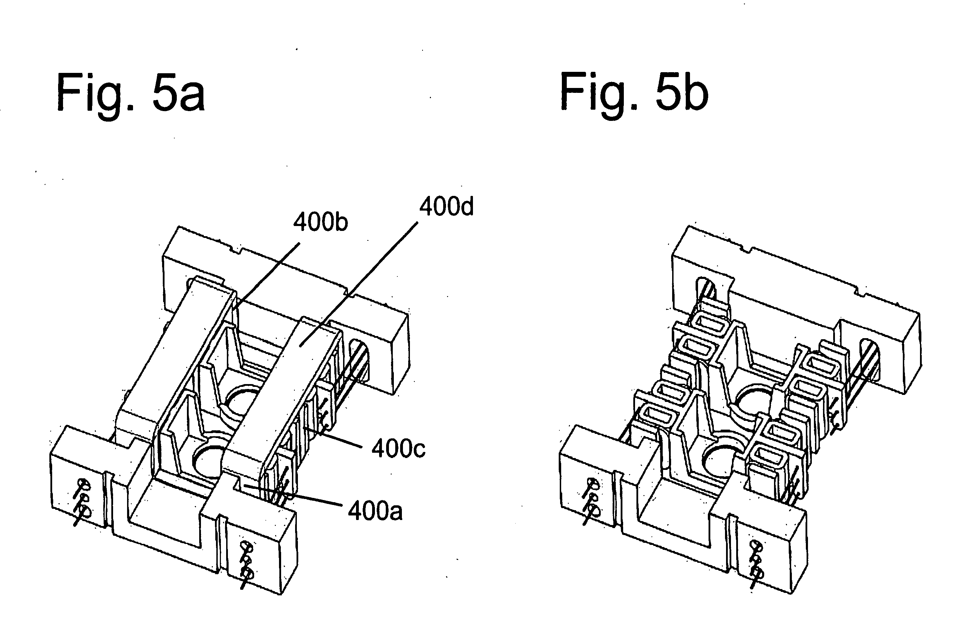

According to the embodiment of the present invention, illustrated in Figures 4, 5a, and 5b, the two sets of suspension wires lead from the first actuator 101 and from the second actuator 102 to the opposite sides of the pickup device. In particular, the first actuator 101 is connected to the set of suspension wires 411 a and 411 b on the right and left side, respectively. The suspension wires 411 a, 411 b lead further to the first wire holder 421. Similarly, the second actuator 102 is connected to the set of suspension wires 412a and 412b on the right and left side, respectively. The suspension wires 412a, 412b further lead to the second wire holder 422, the second wire holder 422 being on the opposite side of the first wire holder 421.

In this embodiment, the frame 400 has a form similar to the frame 200. The frame 400 comprises a front side 400a, a rear side 400b, a middle side 400c, and a bottom side 400d as shown in Figure 5a, which represents the bottom view of the pickup device in accordance with the present invention. Figure 5b further illustrates the bottom side of that pickup device without the frame 400.

A pickup device in accordance with the present invention can be employed in a playback device. Such playback device further comprises a control unit placed outside the pickup adapted to individually control the movement of the first actuator 101 and of the second actuator 102. The control unit can contain one controlling device that controls either the movement of the first actuator 101 or the movement of the second actuator 102. Here, the movement refers to the adjustments of the actuator in the focus and/or tracking direction. Alternatively, two control devices may be employed, one of them controlling the movement of the first actuator 101, and the other controlling the movement of the second actuator 102. Such control devices may be, for instance, implemented on a separated semiconductor circuits.

Summarizing, the present invention relates to a pickup device for scanning an optical medium and comprising two lenses for alternative use. Rather than mounting the lenses on a common actuator, it is the particular approach of the present invention to provide two actuators, each of them carrying one lens. The two actuators are movable independently of each other at least in the lens focus direction. Such design allows the construction of actuators having a smaller mass than an actuator carrying and adjusting two lenses. This is particularly advantageous for the automotive application, where the playback devices that comprise such pickup devices may suffer from mechanical shocks and vibrations.

## Claims

1. A pickup device for scanning an optical medium comprising:
a first movable actuator (101) including a first lens (221) and being adjustable at least in the lens focus direction (z); and
a second movable actuator (102) including a second lens (222) and being adjustable at least in the lens focus direction (z), independently of the adjustment of the first actuator
**characterized by**
a common frame (200) made of magnetically conductive material within which the first actuator and the second actuator are located.

2. A pickup device according to claim 1 wherein the common frame (200) is made of steel.

3. A pickup device according to claim 2 wherein the frame (200) comprises:
a front part (200a) facing the first actuator (101);
a rear part (200b) facing the second actuator (102);
a middle part (200c) separating the space where first actuator (101) is located from the space where the second actuator (102) is located; and
a bottom part (200d) consisting of two bars covering the sides of bottom of the first actuator (101) and the second actuator (102).

4. An optical pickup device according to any of claims 1 to 3 wherein an actuator (101) comprises at least one focus coil (241-244) with coil axis being parallel to the lens focus direction (z).

5. An optical pickup device according to any of claims 1 to 4 wherein an actuator (101) comprises at least one track coil (251-254) with coil axis being perpendicular to the lens focus direction (z).

6. An optical pickup device according to any of claims 1 to 5 wherein an actuator (101) comprises:
a lens holder (231) for carrying a lens (221);
four focus coils (241-244) for moving the actuator in the lens focus direction (z), mounted on the lens holder (231) and having coil axes parallel to the lens focus direction (z); and
four track coils (251-254; 255-258), for moving the actuator (101) in the track direction (x), mounted on the lens holder (231) and having coil axes perpendicular to the lens focus direction (z).

7. An optical pickup device according to any of claims 5 to 6 wherein a track coil (251-254) is located adjacent on a side of a focus coil (241-244).

8. An optical pickup device according to any of claims 4 to 7 further comprising at least one permanent magnet (321-328) interacting with at least one of the actuator coils (241-248, 251-258).

9. An optical pickup device according to claim 2 further comprising at least one permanent magnet (321-328) mounted on the frame and at least one coil (241-248, 251-258) interacting with the at least one magnet, wherein the bottom part (200d) of the frame for magnetic backflow at least partially covers the at least one coil.

10. An optical pickup device according to any of claims 1 to 9 further comprising:
a first set of suspension wires (311 a, 311 b) connected to the first actuator (101); and
a second set of suspension wires (312a, 312b) connected to the second actuator (102),
wherein the first set of suspension wires (311 a, 311 b) and the second set of suspension wires (312a, 312b) lead to the same side of the pickup device.

11. An optical pickup device according to claim 10 wherein the first set of suspension wires (311a, 311 b) leads along beside the outer side of the second set of suspension wires (312a, 312b).

12. An optical pickup device according to any of claims 1 to 9 further comprising:
a first set of suspension wires (311 a, 311 b) connected to the first actuator (101); and
a second set of suspension wires (312a, 312b) connected to the second actuator (102),
wherein the first set of suspension wires (311 a, 311 b) and the second set of suspension wires (312a, 312b) lead to opposite sides of the pickup device.

13. An optical pickup device according to any of claims 10 to 12 wherein a set of suspension wires (311 a, 311 b) serve for mechanical support of an actuator (101) and for electrical driving.

14. An optical pickup device according to any of claims 1 to 13 wherein
the first lens (221) is adapted to focus light of a first wavelength range; and the second lens (222) is adapted to focus light of a second wavelength range.

15. A playback device for reading an optical medium comprising:
an optical pickup device according to any of claims 1 to 14; and
a control unit for individually driving each of the two actuators (101, 102).

## Patentansprüche

1. Abtastvorrichtung zum Abtasten eines optischen Mediums, umfassend:
einen ersten bewegbaren Aktuator (101) mit einer ersten Linse (221), der zumindest in der Fokussierrichtung (z) der Linse einstellbar ist; und
einen zweiten bewegbaren Aktuator (102) mit einer zweiten Linse, der zumindest in der Fokussierrichtung (z) der Linse einstellbar ist, unabhängig von der Einstellung des ersten Aktuators
**gekennzeichnet durch**
einen gemeinsamen aus magnetisch leitendem Material gefertigten Rahmen (200), in dem der erste und der zweite Aktuator angeordnet sind.

2. Abtastvorrichtung nach Anspruch 1, wobei der gemeinsame Rahmen (200) aus Stahl gefertigt ist.

3. Abtastvorrichtung nach Anspruch 2, wobei der Rahmen (200) umfasst:
einen Vorderteil (200a), der dem ersten Aktuator (101) gegenüber liegt einen Rückteil (200b), der dem zweiten Aktuator (101) gegenüber liegt;
einen Mittelteil (200c), der den Raum, in dem sich der erste Aktuator (101) befindet von dem Raum, in dem sich der zweite Aktuator (102) befindet, trennt; und
einen Unterteil (200d), der aus zwei Schienen besteht, die die Seiten des Bodens des ersten Aktuators (101) und des zweiten Aktuators (102) bedecken.

4. Optische Abtastvorrichtung nach einem der Ansprüche 1 bis 3, wobei ein Aktuator (101) zumindest eine Fokussierspule (241-244) mit Spulenachse parallel zur Fokussierrichtung (z) der Linse umfasst.

5. Optische Abtastvorrichtung nach einem der Ansprüche 1 bis 4, wobei ein Aktuator (101) zumindest eine Spurführungsspule (251-254) mit Spulenachse normal zu der Fokussierrichtung (z) der Linse umfasst.

6. Optische Abtastvorrichtung nach einem der Ansprüche 1 bis 5, wobei ein Aktuator (101) umfasst:
einen Linsenhalter (231) zum Tragen einer Linse (221);
vier Fokussierspulen (241-244), mit Spulenachsen parallel zur Fokussierrichtung (z) der Linse, zum Bewegen des Aktuators in der Fokussierrichtung (z) der Linse, die auf dem Linsenhalter (231) befestigt sind ; und
vier Spurführungsspulen (251-254; 255-258) mit Spulenachsen normal zur Fokussierrichtung (z) der Linse, zum Bewegen des Aktuators (101) in der Spurrichtung (x) , die auf dem Linsenhalter (231) befestigt sind.

7. optische Abtastvorrichtung nach einem der Ansprüche 5 bis 6 wobei eine Spurführungsspule (251-254) an der Seite der Fokussierspule (241-244) angrenzend befestigt ist.

8. Optische Abtastvorrichtung nach einem der Ansprüche 4 bis 7 mit zumindest einem Permanentmagneten (321-328), der mit zumindest einem der Aktuatorspulen (241-248, 251-258) wechselwirkt.

9. Optische Abtastvorrichtung nach Anspruch 2, die des Weiteren zumindest einen Permanentmagneten (321-328) , der auf dem Rahmen aufgebracht ist, und zumindest eine mit zumindest einem Magneten wechselwirkende Spule (241-248, 251-258) umfasst, wobei der Unterteil (200d) des Rahmens zumindest teilweise eine Spule für den magnetischen Rückfluss bedeckt.

10. optische Abtastvorrichtung nach einem der Ansprüche 1 bis 9 umfassend:
eine erste Gruppe von Aufhängungsleitungen (311a, 311b) verbunden mit dem ersten Aktuator (101); und
eine zweite Gruppe von Aufhängungsleitungen (312a, 312b) verbunden mit dem zweiten Aktuator (102),
wobei die erste Gruppe von Aufhängungsleitungen (311 a, 311 b) und die zweite Gruppe von Aufhängungsleitungen (312a, 312b) zu derselben Seite der Abtastvorrichtung führen.

11. optische Abtastvorrichtung nach Anspruch 10, wobei die erste Gruppe von Aufhängungsleitungen (311 a, 311 b) entlang der Seite der zweiten Gruppe von Aufhängungsleitungen (312a, 312b) geführt wird.

12. Optische Abtastvorrichtung nach einem der Ansprüche 1 bis 9 des Weiteren umfassend:
eine erste Gruppe von Aufhängungsleitungen (311 a, 311 b) verbunden mit dem ersten Aktuator (101); und
eine zweite Gruppe von Aufhängungsleitungen (312a, 312b) verbunden mit dem zweiten Aktuator (102),
wobei die erste Gruppe von Aufhängungsleitungen (311a, 311 b) und die Gruppe von Aufhängungsleitungen (312a, 312b) zu jeweils gegenüberliegenden Seiten der Abtastvorrichtung führen.

13. Optische Abtastvorrichtung nach einem der Ansprüche 10 bis 12, wobei eine Gruppe von Aufhängungsleitungen (311a, 311 b) zur mechanischen Abstützung eines Aktuators und zur elektrischen Versorgung dient.

14. Optische Abtastvorrichtung nach einem der Ansprüche 1 bis 13, wobei die erste Linse (221) zum Fokussieren von Licht eines ersten Wellenlängenbereichs abgestimmt ist; und die zweite Linse (222) zum Fokussieren von Licht eines zweiten Wellenlängenbereichs abgestimmt ist.

15. Abspieleinheit zum Lesen eines optischen Mediums, umfassend:
eine optische Abtastvorrichtung nach einem der Ansprüche 1 bis 14 und eine Steuereinheit für eine individuelle Ansteuerung jedes der zwei Aktuatoren (101, 102).

## Revendications

1. Dispositif de capture pour scanner un support optique comprenant :
un premier actionneur mobile (101) incluant une première lentille (221) et réglable au moins dans la direction de mise au point de la lentille (z) ; et
un second actionneur mobile (102) comportant une seconde lentille (222) et réglable au moins dans la direction de mise au point de la lentille (z), indépendamment du réglage du premier actionneur,
**caractérisé par**
un châssis commun (200) en matériau magnétiquement conducteur à l'intérieur duquel le premier actionneur et le second actionneur sont positionnés.

2. Dispositif de capture selon la revendication 1, dans lequel le châssis commun (200) est constitué d'acier.

3. Dispositif de capture selon la revendication 2, dans lequel le châssis (200) comprend :
une partie avant (200a) disposée en regard du premier actionneur (101) ;
une partie arrière (200b) disposée en regard du second actionneur (102) ;
une partie centrale (200c) séparant l'espace où le premier actionneur (101) est positionné de l'espace où le second actionneur (102) est positionné ; et
une partie inférieure (200d) consistant en deux barreaux couvrant les côtés du dessous du premier actionneur (101) et du second actionneur (102).

4. Dispositif de capture optique selon l'une quelconque des revendications de 1 à 3, dans lequel un actionneur (101) comprend au moins une bobine de mise au point (241-244), l'axe de la bobine étant parallèle à la direction de mise au point de la lentille (z).

5. Dispositif de capture optique selon l'une quelconque des revendications de 1 à 4, dans lequel un actionneur (101) comprend au moins une bobine de piste (251-254), l'axe de la bobine étant perpendiculaire à la direction de mise au point de la lentille (z).

6. Dispositif de capture optique selon l'une quelconque des revendications de 1 à 5, dans lequel un actionneur (101) comprend :
un support de lentille (231) pour porter une lentille (221) ;
quatre bobines de mise au point (241-244) pour déplacer l'actionneur selon la direction de mise au point de la lentille (z), montées sur le support de lentille (231) et ayant des axes de bobine parallèles à la direction de mise au point de la lentille (z) ; et
quatre bobines de piste (251-254 ; 255-258) pour déplacer l'actionneur (101) selon la direction de la piste (x), montées sur le support de lentille (231) et ayant des axes de bobine perpendiculaires à la direction de mise au point de la lentille (z).

7. Dispositif de capture optique selon l'une quelconque des revendications de 5 ou 6, dans lequel une bobine de piste (251-254) est adjacente à un côté d'une bobine de mise au point (241-244).

8. Dispositif de capture optique selon l'une quelconque des revendications de 4 à 7, comprenant en outre au moins un aimant permanent (321-328) interagissant avec au moins une des bobines d'actionneur (241-248, 251-258).

9. Dispositif de capture optique selon la revendication 2, comprenant en outre au moins un aimant permanent (321-328) monté sur le châssis et au moins une bobine (241-248, 251-258) interagissant avec l'au moins un aimant, dans lequel la partie inférieure (200d) du châssis pour le retour magnétique couvre au moins partiellement l'au moins une bobine.

10. Dispositif de capture optique selon l'une quelconque des revendications de 1 à 9, comprenant en outre :
un premier ensemble de fils de suspension (311a, 311b) connecté au premier actionneur (101) ; et
un second ensemble de fils de suspension (312a, 312b) connecté au second actionneur (102),
dans lequel le premier ensemble de fils de suspension (311a, 311b) et le second ensemble de fils de suspension (312a, 312b) mènent au même côté du dispositif de capture.

11. Dispositif de capture optique selon la revendication 10, dans lequel le premier ensemble de fils de suspension (311a, 311b) mène le long du côté extérieur du second ensemble de fils de suspension (312a, 312b).

12. Dispositif de capture optique selon l'une quelconque des revendications de 1 à 9, comprenant en outre :
un premier ensemble de fils de suspension (311a, 311b) connecté au premier actionneur (101) ; et
un second ensemble de fils de suspension (312a, 312b) connecté au second actionneur (102),
dans lequel le premier ensemble de fils de suspension (311a, 311b) et le second ensemble de fils de suspension (312a, 312b) mènent à des côtés opposés du dispositif de capture.

13. Dispositif de capture optique selon l'une quelconque des revendications de 10 à 12, dans lequel un ensemble de fils de suspension (311a, 311b) sert de support mécanique d'un actionneur (101) et pour l'entraînement électrique.

14. Dispositif de capture optique selon l'une quelconque des revendications de 1 à 13, dans lequel
la première lentille (221) est conçue pour focaliser de la lumière d'une première plage de longueurs d'onde ; et
la seconde lentille (222) est conçue pour focaliser de la lumière d'une seconde plage de longueurs d'onde.

15. Dispositif de lecture pour lire un support optique comprenant :
un dispositif de capture optique selon l'une quelconque des revendications de 1 à 14 ; et
une unité de contrôle pour entraîner individuellement chacun des deux actionneurs (101, 102).
